# EUROPEAN PATENT APPLICATION

(11) **EP 1 983 696 A1**
(43) Date of publication of application: **22.10.2008**
(21) Application number: 07007675.7
(22) Date of filing: 16.04.2007
(51) Int. Cl.: H04L 12/56

(54) **Mobilized inhouse network and method for operating such a network**

(71) Applicant: T-Mobile International AG & Co. KG, 53227 Bonn (DE)
(72) Inventor: Brune, Peter, 53340 Meckenheim (DE); Hochscherff, Andreas, 53129 Bonn (DE); Michel, Uwe, 53604 Bad Honnef (DE); Günther, Bernd, 53229 Bonn (DE); Roth, Wolfgang, 53175 Bonn (DE)
(74) Representative: Riebling, Peter

(57) **Abstract**

The invention relates to a method for operating a mobilized Inhouse Network, comprising the step of extending an existing inhouse LAN to a public mobile radio network. The Mobilized Inhouse Network comprises an Inhouse LAN consisting of an Inhouse Gateway IGW connected to at least one Inhouse device, an Exhouse Server ESV and at least a Mobile Terminal MTM adapted for operation with the Mobilized Inhouse Network system.

## Description

### Field of the Invention

The invention relates to the field communications networks and their interconnections, in particular to a Mobilized Inhouse Network, hereinafter also referred to as MIN, and a method for operating such a network.

### State-of-the-Art

Access to a home (inhouse) network, e.g. an Inhouse Local Area Network (ILN) by means of the Internet and standard browser software is well known today. This requires that the IP address associated to the ILN is known to the end user. Means do as well exist which allow determining this IP address by means of DYNDNS which stands for Dynamic Domain Name System or similar registration procedure. However this is not very convenient and provides little flexibility to the user.

### Summary of Invention

It is the object of the invention to propose a Mobilized Inhouse Network and a method for operating such a network which allows a user to gain access from other networks and which is easy and flexible to use.

This objective is achieved by providing a Mobilized Inhouse Network and a method for operating such a network as described in the independent claims to which it is referred to at this point.

Other features which are considered to be characteristic for the invention are set forth in the appended claims to which it is referred to at this point.

The Mobilized Inhouse Network as proposed by the invention is a system which extents any existing inhouse network to a public mobile radio network, thus allowing to access any local inhouse function and/or information content now remotely via a mobile handset. The MIN system allows as well for connecting two different inhouse networks, controlled by a mobile handset, in order to share functions and/or information content across both networks.

The MIN solution targets to be a self standing solution being offered towards mobile network operators and requiring as less interworking as possible with the infrastructure of the mobile network operators.

The invention will now be described with reference to the accompanied drawing.

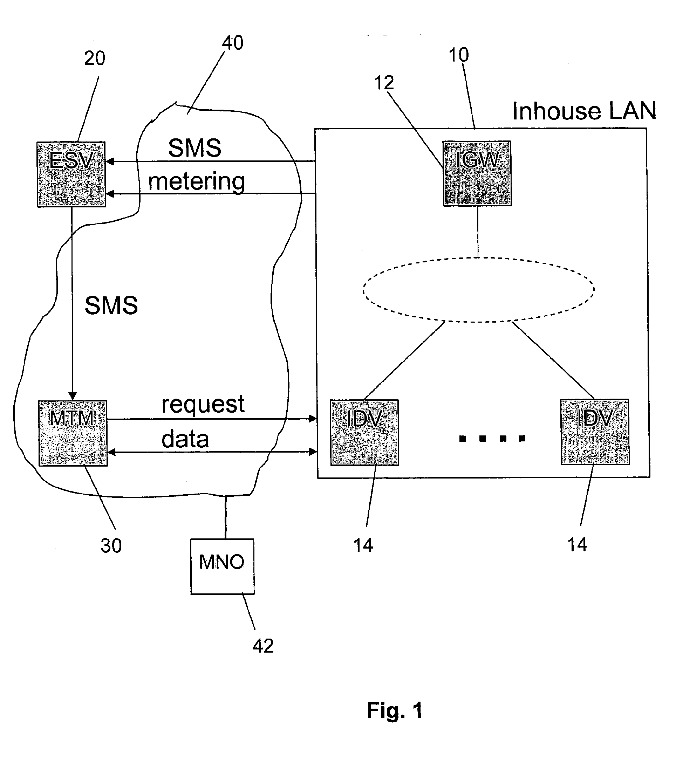

Figure 1 is a schematic view of the Mobilized Inhouse Network and its components and their interconnection.

### Detailed Description of the Invention

With reference to Figure 1 the entire MIN system consists of:
an Inhouse LAN (ILN) 10 comprising a newly implemented Inhouse Gateway (IGW) 12
a newly implemented Exhouse Server (ESV) 20, and
a Mobile Terminal (MTM) 30 adapted for operation with the MIN system and
a mobile radio network (40).

The MIN system may consist of one or several ILNs, one or several MTMs, and one ESV.

The Inhouse LAN 10:
The ILN comprises a new Inhouse Gateway (IGW) 12 and one or several inhouse devices (IDV) 14 of different types, e.g. media servers, webcams,
Personal Computers, set-top-boxes, electronic game devices, DSL router, etc. which are connected by a LAN and contribute to the overall functionality of the MIN system, and which interact with the IGW.

The IGW 12 provides all the functions which are necessary to be added to an already existing inhouse LAN environment to constitute the MIN system. The IGW is therefore the entity where the MIN system materialises inside the home network. The IGW function may be hosted in a single entity or be distributed across the LAN. However, it is assumed, that all incoming and outcoming MIN-data traffic, i.e. traffic that is subject to the MIN solution and which is exchanged between the private LAN and a public WAN, flows through the IGW.

The IGW 12 may provide one or several of the following functions:
- Abstraction and translation of inhouse capabilities, Universal Plug and Play (UPnP)/web-services gateway
   The IGW analyses the LAN environment for existing functionality, e.g. via implementation of a UPnP client function. It reorganises the given functionality and exposes this functionality by means of web-services and dynamically generated web pages to be accessible from outside of the home network.
- IP address monitoring and notification to the MTM
   It is assumed that the Internet Service Provider which provides WAN connectivity to the ILN allocates dynamic IP addresses to the ILN. The IGW recognises any change of the current IP address. Whenever this happens the IGW informs the MTM about that change and provides the actual IP address to the MTM, preferably by means of binary coded SMS which is forwarded to a mobile network operator 42 via an Exhouse Server (ESV), as will be described below. This functionality is comparable with a DYNDNS registration procedure but based on SMS and without the need to have a central DYNDNS server in between.
- MTM authentication function
   In order to restrict access only to those MTMs being authorised to use the inhouse functions, the IGW generates authentication tokens, i.e. in form of random numbers. These tokens are transmitted to a preconfigured set of MTMs. For this a list of MSISDN numbers associated to the MTMs is stored in the IGW which are allowed to access the inhouse LAN. The tokens are sent by means of binary coded SMS to the related MTMs via a public mobile radio network 40. This function can be combined with the IP address notification function. Whenever later a MTM tries to access the IGW web server it transmits the token to the IGW. The IGW compares the received token to the token previously sent to the MTM. Only if both tokens match the access is granted.
- IP flow metering
   Since the MIN concept does not foresee any central server or proxy where the MIN traffic passes through the metering of traffic has to be performed inside the IGW. The IGW therefore counts the volume of MIN traffic and reports this back to the ESV. The time period for reporting the traffic volume is configurable.

### The Exhouse Server (ESV) 20:

The Exhouse Server is the only central node in the MIN system and it hosts a set of central functions which are necessary for the interworking between an ILN and a typical mobile radio network 40. The ESV allows to retain the mobile network unmodified thus implementing any necessary adaptation function within the ESV. The ESV can be part of the mobile radio network 40 or can be a stand-alone unit connected to the mobile radio network 40.

The ESV 20 contains the following functions.
- Web-Service/SMS Gateway
   The ESV receives notifications on IP address changes from the IGW by means of http/https requests or any other suitable IP protocol, e.g. email. The content of this notification, i.e. IP address information and an authentication token, are translated into binary SMS messages and are forwarded to a SMS Center residing at the respective mobile network operator 42. The SMSC transmits this SMS finally to the desired recipient, i.e. a desired MTM.
- Charging Gateway
   The ESV receives the metered IP flow records from the IGW. This data is mediated into formats being processible by the mobile network operator and is the forwarded to the mobile network operator. The charging gateway may as well pre-process intermediate records and consolidate them before forwarding to the mobile network operator. Also, the ESV may provide an online charging interface towards the mobile network operator for support of hot billing or prepaid customers.

### The Mobile Terminal 30:

Mobile terminals properly interworking with MIM system have to have a slightly extended functionality compared to standard mobile terminals in the market. It is assumed that the required additional functionality is either implemented as a SIM toolkit application (SAT) and/or as a Java Application. The functions described afterwards are based on the SAT case; however, the same functions may as well be realised by means of Java applications running on Java midlets provided by the terminal.

The functions in the MTM being necessary on top of a standard mobile terminal are:
- Storing IP address updates and authentication tokens
   Whenever a binary SMS from the ESV are received in the mobile terminal, the SMS is interpreted by a SAT application which extracts the IP address and token from the message and stores them on the Subscriber Identity Module (SIM card). These parameters are required when the subscriber wants to get access to an ILN.
- ILN access
   As soon as the subscriber wants to access an ILN, he/she must activate a SAT function via the man machine interface of the mobile terminal. The SAT application starts running, launches the terminal browser and passes a certain URL to the browser. The URL contains the actual IP address of the respective LAN and also contains the authentication token. This leads then to an http/https request onto a web server residing in the IGW.

The system as described here provides improvements in the following terms:
- No need for a central registration function
   In contrast to existing solutions, e.g. DYNDNS, the MIN system does not require a central registration function. Registration, authentication and IP address management functions entirely rely in the endpoints of the communication, i.e. MTM and IGW. The MIN concept follows very much a peer-to-peer approach.
- Abstraction and Integration
   No system approach is known which tries to integrate and abstract all the different inhouse functions under a common integration and Graphic User Interface (GUI) framework, as provided by the MIN system.
- Connecting different inhouse networks controlled via a mobile terminal Although the concept of ambient networks foresees to join two networks together no concept is known which allows controlling the connection of two or more networks by means of a mobile terminal in between, acting as a kind of broker.
- Full system solution
   Although, many ingredients of the solutions do exist today no complete system is known which is comparable to the MIN system, and which is offered as a self standing solution towards a mobile network operator. The solution as presented here has very little need for integration into mobile radio networks which allows for easy deployment. Alternative systems are expected to require a much higher level of integration, e.g. reuse of authentication schemes of the MNO to allow both communication legs to be connected, etc.

Options and variants of the MIN system:
- SIM Card in IGW
   Optionally a SIM card could be used in the IGW to improve authentication and to allow for a secure transmission of metering data between the inhouse LAN and the ESV.
- Registration in ESV
   Alternatively of being a function of the IGW, the list of MTMs being accessible from a specific inhouse LAN could be kept in the EVS. This would prevent completely an MTM being accessed in case of an error or by intent from an unauthorized inhouse LAN.
- Use of alternative services
   A browser-based web service is assumed to be the cornerstone of the Mobilized Inhouse Network. However the described solution is also applicable for any other service e.g. for a specific client on the mobile radio terminal.

## Claims

1. Mobilized Inhouse Network comprising:
an Inhouse LAN (10) consisting of an Inhouse Gateway IGW (12) connected to at least one Inhouse device (14),
an Exhouse Server ESV (20), and
at least a Mobile Terminal MTM (30) adapted for operation with a mobile radio network (40) and the Mobilized Inhouse Network.

2. Mobilized Inhouse Network according to claim 1, wherein the Inhouse Gateway (12), the Exhouse Server (20) and the Mobile Terminal (30) are connected together via a fixed and/or IP based mobile radio network (40).

3. A method for operating a mobilized Inhouse Network, comprising the step of extending an existing inhouse LAN (10) to a public mobile radio network (40).

4. A method according to claim 3, providing access to any function and/or information content of the inhouse LAN (10) remotely via a mobile terminal MTM (30) of the mobile radio network.

5. A method according to claim 3 or 4, providing a Peer-to-peer address registration of the MTM (30) with the inhouse LAN (10) by means of a short message transmission and an associated token based authentication.

6. A method according to claims 3-5, wherein at least two different inhouse LANs (10) are connected via the mobile radio network and controlled by the mobile terminal MTM (30) in order to share functions and/or information content across both inhouse LANs.

7. A method according to claims 3-6, providing an automated recognition, abstraction and translation of inhouse functions and information content which is being fully distributed across an inhouse LAN (10).

8. A method according to claims 3-7, wherein the inhouse LAN (10) comprises an Inhouse Gateway IGW (12) which analyses the Inhouse LAN (10) environment for existing functionality, reorganises the functionality and exposes this functionality by means of web-services and dynamically generated web pages to be accessible from outside of the inhouse LAN.

9. A method according to claims 3-8, wherein the IGW (12) recognises any change of the current IP address of the Inhouse LAN (10), informs the MTM (30) about that change and provides the actual IP address to the MTM (30).

10. A method according to claims 3-9, wherein the current IP address if the inhouse LAN (10) is provided to the MTM (30) by means of a binary coded Short Message SMS which is forwarded to an mobile radio network operator (42) via an Exhouse Server ESV (20).

11. A method according to claims 3-10, wherein the IGW (12) generates authentication tokens which are transmitted to a preconfigured set of MTMs, wherein each MTM (30) authenticates itself to the IGW (12) by means of a token.

12. A method according to claim 11, wherein the tokens are transmitted to the MTM (30) by means of a binary coded Short Message SMS.

13. A method according to claims 3-12, wherein the IGW (12) performs a metering of the traffic data volume flowing through the IGW in form of IP flow records.

14. A method according to claims 3-13, wherein the ESV (20) receives notifications on IP address changes from the IGW (12), the content of this notification is translated into a binary Short Message SMS which is forwarded to the desired recipient MTM (30).

15. A method according to claims 3-14, wherein the ESV (20) receives the metered I P flow records from the IGW (12) and transmits them to the mobile network operator (42).

16. A method according to claims 3-15, wherein the ESV (20) provides an online charging interface towards the mobile network operator (42) for support of hot billing or prepaid customers.

17. A method according to claims 3-16, wherein the MTS (30) stores IP address updates and authentication tokens received from the ESV (20) for later access and authentication with the IGW (12).

18. A method according to claims 3-17, wherein the MTM (30) allows for remote controlling of at least one inhouse LAN (10) and associated authorisation procedures based on token distribution/forwarding schemes.

19. A data processing software program comprising a program code which performs a method according to the claims 3-18 when it is executed on a suitable data processing system.

20. A data processing program product comprising a program code which is executable on a data processing system for performing a method according to claims 3-18.
